# EUROPÄISCHE PATENTSCHRIFT

(11) **EP 0 685 021 B1**
(45) Veröffentlichungstag und Bekanntmachung des Hinweises auf die Patenterteilung: **15.10.1997**
(21) Anmeldenummer: 95904498.3
(22) Anmeldetag: 17.12.1994
(51) Int. Cl.: E03C 1/33

(54) **METALLBLECH-EINBAUBECKEN ODER -SPÜLE UND VERFAHREN ZU DESSEN BZW. DEREN HERSTELLUNG**
SHEET-METAL BUILT-IN BASIN OR SINK UNIT AND PROCESS FOR PRODUCING IT
CUVETTE OU EVIER EN TOLE METALLIQUE A ENCASTRER ET SON PROCEDE DE FABRICATION

(30) Priorität: 21.12.1993 DE 4343766; 21.07.1994 DE 4425764
(43) Veröffentlichungstag der Anmeldung: 06.12.1995
(73) Patentinhaber: Blanco GmbH & Co. KG, D-75038 Oberderdingen (DE)
(72) Erfinder: SCHNEIDER, Wolfgang, D-75447 Sternenfels (DE); WOLLANKA, Peter, D-74918 Angelbachtal (DE); NEULINGER, Helmut, D-75038 Oberderdingen (DE); HAUTZINGER, Stefan, D-75057 Kürnbach (DE); WEIGELE, Heinz, D-75057 Kürnbach (DE)
(74) Vertreter: Haecker, Walter
(86) Internationale Anmeldenummer: EP9404206
(87) Internationale Veröffentlichungsnummer: WO9517557

(56) Entgegenhaltungen:
- AU-D- 5 597 573
- US-A- 3 071 780
- US-A- 3 143 743

## Beschreibung

Die Erfindung betrifft ein Metallblech-Einbaubecken oder eine Metallblech-Einbauspüle mit einem umlaufenden Randbereich, welcher eine (im eingebauten Zustand) horizontal verlaufende und mehr oder minder ebene Randzone besitzt, an die sich nach innen eine (in einem vertikalen Schnitt) konvex gekrümmte Übergangszone anschließt, über die der Randbereich in weiter innen und tiefer als die Randzone liegende Bereiche des Beckens bzw. der Spüle übergeht, sowie mit mindestens einem an der Unterseite des Beckens bzw. der Spüle angeschweißten metallischen Halteelement. Insbesondere betrifft die Erfindung ein solches Einbaubecken bzw. eine solche Einbauspüle, das bzw. die durch Tiefziehen aus Edelstahlblech hergestellt wurde, und zwar bevorzugt ein solches Einbaubecken bzw. eine solche Einbauspüle, bei dem bzw. der das eigentliche Becken oder der sogenannte Spiegelbereich nahtlos (ohne Schweißnaht) in den genannten Randbereich übergeht (unter dem sogenannten Spiegelbereich versteht der Spülenfachmann denjenigen sich an die umlaufende ebene Randzone anschließenden Bereich, welcher sich bis zum Rand eines Beckens und/oder einer Abtropf- bzw. Arbeitsfläche einer Einbauspüle erstreckt).

Im folgenden wird die Erfindung lediglich anhand einer Einbauspüle näher erörtert werden, die ja entweder nur aus einem Spülbecken mit umlaufendem Randbereich oder aus einem mit einem umlaufenden Randbereich versehenen flächigen Bereich besteht, in den ein oder mehrere Spülbecken und gegebenenfalls ein sogenanntes Restebecken sowie eine Abtropf- oder Arbeitsfläche integriert sind.

Bei herkömmlichen Einbauspülen aus rostfreiem Stahlblech (Edelstahlblech) geht man entweder so vor, daß die ganze Spüle aus einer einzigen Blechtafel im Tiefziehverfahren hergestellt wird, oder wird ein separat tiefgezogenes Becken in einen flachen Spülenbereich eingeschweißt, welcher z. B. die Arbeits- oder Abtropffläche und den umlaufenden Randbereich bildet und einen Ausschnitt für die Aufnahme des Spülbeckens besitzt.

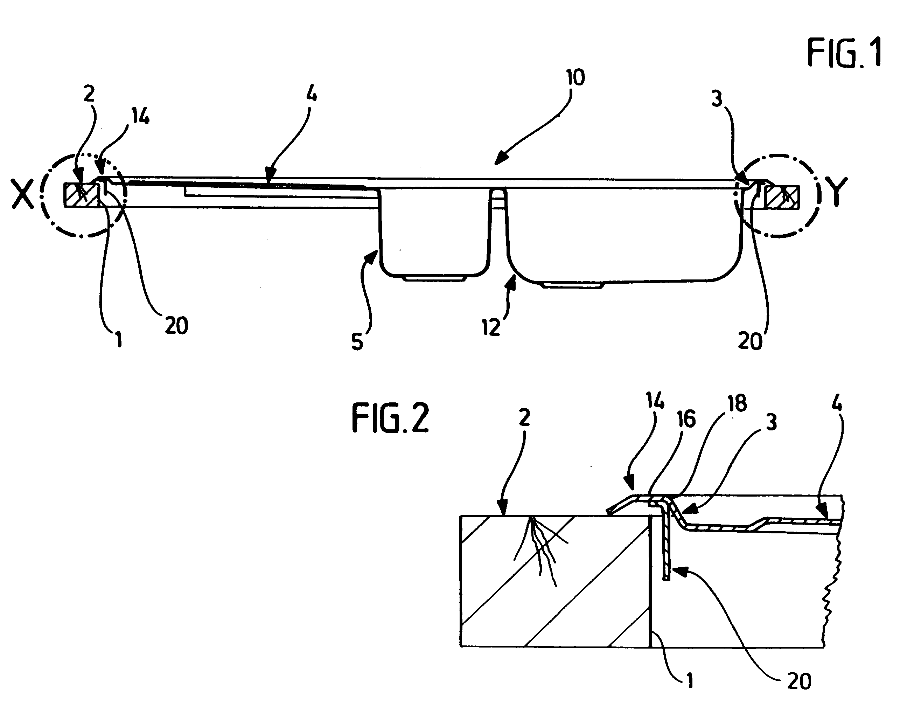

Derartige Einbauspülen müssen in einem Ausschnitt einer Arbeits- oder Abdeckplatte befestigt werden, wozu üblicherweise an der Unterseite des umlaufenden Randbereiches mehrere Edelstahlblech-Halteelemente angeschweißt werden, welche der Befestigung der Einbauspüle an der Unterseite der Arbeits- oder Abdeckplatte oder am Rand der Einbauöffnung dieser Platte für die Einbauspüle dienen. Befestigt wurden die Halteelemente bislang stets an der Unterseite der horizontal verlaufenden und zumindest im wesentlichen ebenen Randzone des umlaufenden Randbereichs, und zwar mittels Elektro-Punktschweißen, was unweigerlich zu der Notwendigkeit führt, die Oberseite, d. h. die Sichtseite der Einbauspüle nachzubearbeiten - dies würde vermutlich auch für jede andere Art des Schweißens gelten. Ein solcher Stand der Technik ergibt sich z. B. aus der AU-D-55 975/73 (Fig. 1 in Verbindung mit Seite 5, letzter vollständiger Absatz).

Überraschend wurde nun festgestellt, daß selbst bei einer nahtlos hergestellten Einbauspüle, deren Becken also nicht eingeschweißt ist, die vielmehr als Ganzes aus einer einzigen Blechtafel durch Tiefziehen hergestellt wurde, die Befestigungsstellen der Halteelemente an der Ober- oder Sichtseite der Einbauspüle dann nicht nachbearbeitet werden müssen, wenn die Schweißstelle bzw. Schweißstellen in der gekrümmten Übergangszone, die sich nach innen an die umlaufende und zumindest im wesentlichen ebene Randzone anschließt, angeordnet und mittels einen Lasers hergestellt wird bzw. werden. Ein erfindungsgemäßes Einbaubecken bzw. eine erfindungsgemäße Einbauspüle zeichnet sich also dadurch aus, daß die der Befestigung des Halteelements dienende Schweißstelle in der besagten Übergangszone liegt und als Laserschweißstelle ausgebildet ist.

Die Erfindung beruht auf der Erkenntnis, daß die besagte, konvex gekrümmte Übergangszone infolge der z. B. für das Herstellen des sogenannten Spiegelbereichs erforderlichen Ziehoperation ein gegenüber den anderen Oberflächenbereichen des Bauteils leicht verändertes Oberflächenbild aufweist, weshalb durch die erfindungsgemäße Befestigung des Halteelements bzw. der Halteelemente selbst bei einem nahtlosen Bauteil an dessen Oberseite keine nennenswerten sichtbaren Veränderungen hervorgerufen werden.

Werden bei erfindungsgemäß gestalteten Bauteilen als Halteelemente die schon beim Stand der Technik üblichen Metallblech-Haltewinkel verwendet, wird vorgeschlagen, einen solchen Haltewinkel so auszubilden, daß der Übergang zwischen den beiden Winkelschenkeln an die Krümmung der Unterseite der besagten Übergangszone angepaßt ist, und die Schweißstelle in den Bereich des Übergangs zwischen den beiden Winkelschenkeln zu legen.

Die Erfindung ermöglicht es aber auch, bei den in Rede stehenden Bauteilen Halteelemente in Form von Schienen zu verwenden, deren eine Längskante stumpf mit der Unterseite der besagten Übergangszone verschweißt ist, ohne daß dadurch sichtbare Beschädigungen an der Oberseite des Bauteils auftreten.

Die Erfindung betrifft ferner ein Verfahren zur Herstellung eines Beckens oder einer Spüle, bei welchem zum Schweißen von Schweißpunkten ein gepulster Festkörperlaser und zum Schweißen von Schweißnähten ein Dauerstrich-Festkörperlaser oder ein CO₂-Laser verwendet wird.

Weitere Merkmale, Vorteile und Einzelheiten der Erfindung ergeben sich aus der nachfolgenden Beschreibung und der beigefügten zeichnerischen Darstellung einiger bevorzugter Ausführungsformen der Erfindung; in der Zeichnung zeigen:
- Fig. 1: einen schematischen Längsschnitt durch eine Einbauspüle, wobei auch noch die der Einbauspüle benachbarten Bereiche einer Arbeits- oder Abdeckplatte angedeutet wurden, welche eine die Einbauspüle aufnehmende Einbauöffnung besitzt, längs deren Rand der umlaufende Randbereich der Einbauspüle auf der Arbeits- oder Abdeckplatte aufliegt;
- Fig. 2: den in Fig. 1 mit "X" bezeichneten Ausschnitt in größerem Maßstab als in Fig. 1, nämlich im Maßstab 1:1;
- Fig. 3: den in Fig. 1 mit "Y" bezeichneten Ausschnitt in noch größerem Maßstab, wobei die Arbeits- oder Abdeckplatte weggelassen wurde;
- Fig. 4: einen Ausschnitt aus Fig. 3, wobei dieser Ausschnitt einen Teil des in Fig. 3 gezeigten Halteelements und die gekrümmte Übergangszone zwischen der umlaufenden ebenen Randzone und dem sogenannten Spiegelbereich in noch größerem Maßstab als Fig. 3 darstellt;
- Fig. 5: eine der Fig. 3 entsprechende Schnittdarstellung durch eine zweite Ausführungsform, bei der das Halteelement als Schiene ausgebildet ist, und
- Fig. 6: eine der Fig. 4 entsprechende Darstellung dieser zweiten Ausführungsform.

Die Fig. 1 zeigt eine mit einer Einbauöffnung 1 versehene und als Ganzes mit 2 bezeichnete Arbeits- oder Abdeckplatte und eine in die Einbauöffnung 1 eingebaute und als Ganzes mit 10 bezeichnete Einbauspüle. Diese besitzt einen äußeren, um die Einbauspüle herumlaufenden Randbereich 14 (siehe auch Fig. 2), welcher eine horizontal verlaufende und zumindest im wesentlichen ebene Randzone 16 hat, die über eine konvex gekrümmte Übergangszone 18 in einen weiter innerhalb liegenden sogenannten Spiegelbereich 3 übergeht. Des weiteren besitzt die Einbauspüle 10 eine Abtropf- oder Arbeitsfläche 4, ein kleines sogenanntes Restebecken 5 und ein großes Spülbecken 12 - der Spiegelbereich 3 läuft also um den von der Abtropffläche 4, dem Restebecken 5 und dem Spülbecken 12 gebildeten Bereich der Einbauspüle 10 herum.

Der Befestigung der Einbauspüle 10 an dem die Einbauöffnung 1 bildenden Rand der Abdeckplatte 2 dienen bei dieser Ausführungsform als winkelförmige Metallblechteile gestaltete Halteelemente 20, die in noch näher zu beschreibender Weise an der Unterseite der Einbauspüle 10 befestigt sind.

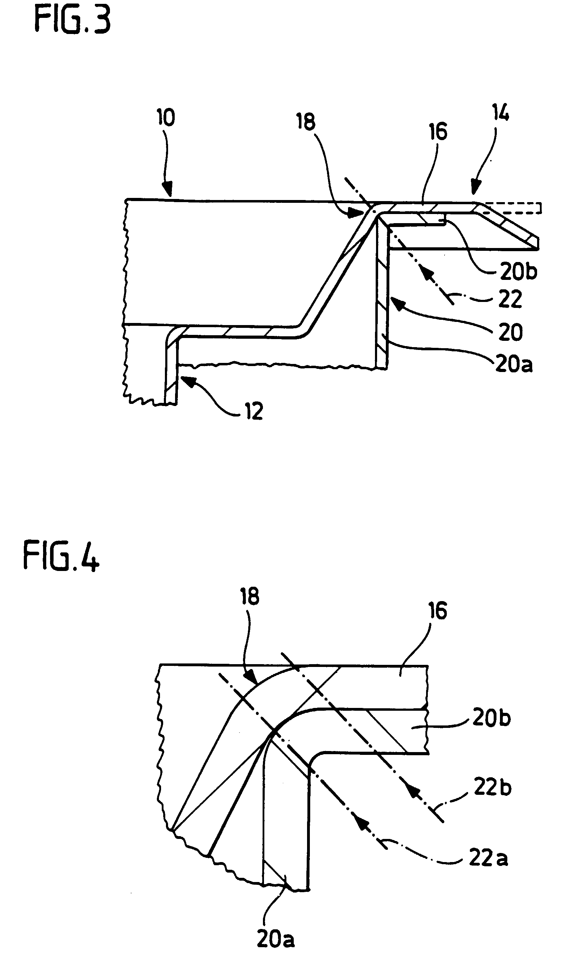

In Fig. 3 sind zwei Ausführungsmöglichkeiten des Randbereichs 14 der Einbauspüle 10 mit ausgezogenen Linien bzw. gestrichelt dargestellt, wobei diese unterschiedliche Gestaltung jedoch keinen Einfluß auf die vorliegende Erfindung hat.

Die Halteelemente 20 der Ausführungsform nach den Figuren 1 bis 4 besitzen jeweils zwei Schenkel 20a und 20b (siehe Fig. 3), wobei der Übergang des einen Schenkels in den anderen Schenkel auf seiner konvexen Seite in seiner Krümmung an diejenige der gekrümmten Übergangszone 18 auf deren konkaver Seite angepaßt ist.

Statt nun, wie bislang üblich, den mittleren Bereich des Schenkels 20b mit dem mittleren Bereich der ebenen, horizontal verlaufenden Randzone 16 z. B. durch Elektro-Punktschweißen zu verbinden, erfolgt erfindungsgemäß eine Laserschweißung im Bereich der Übergangszone 18 bzw. der Übergangszone zwischen den beiden Schenkeln 20a und 20b, wobei der Laserstrahl in Fig. 3 mit 22 bezeichnet wurde. Erfindungsgemäß wird der Laser von unten gegen das Halteelement 20 gerichtet, und zwar insbesondere schräg zur horizontalen Randzone 16 und dem Schenkel 20b des Halteelements 20.

Die Fig. 4 läßt erkennen, daß für das Laserschweißen ein erheblicher Toleranzbereich zur Verfügung steht, ohne daß vom Grundkonzept der Erfindung abgewichen werden müßte, nämlich die Schweißstelle im Bereich der Übergangszone 18 anzuordnen. Ein sich in der Nullage befindlicher Laserstrahl wurde mit 22a bezeichnet, während ein sich an der Grenze des Toleranzbereichs befindlicher Laserstrahl mit 22b bezeichnet wurde.

Alle vorstehenden Ausführungen, die sich auf das in Fig. 1 rechts dargestellte Halteelement 20 beziehen, gelten natürlich in gleicher Weise für das in Fig. 1 links dargestellte Halteelement 20.

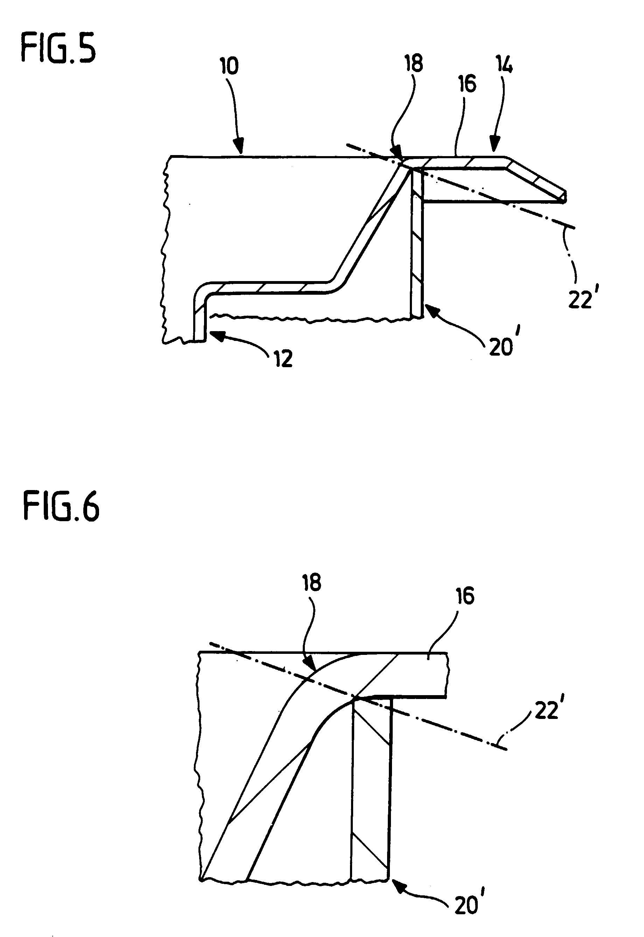

Bei der in den Figuren 5 und 6 dargestellten Ausführungsform hat das Halteelement 20' die Gestalt einer Schiene oder Leiste, deren obere Längskante stumpf mit der eigentlichen Einbauspüle 10 verschweißt wurde, und zwar durch eine sich entlang dieser Längskante erstreckende Schweißnaht. Der hierfür eingesetzte Laserstrahl wurde mit 22' bezeichnet. Auch in diesem Fall wurde der Laserstrahl 22' wieder schräg von unten gegen die Einbauspüle 10 gerichtet, und die obere Längskante des Halteelements 20' liegt im Bereich der Übergangszone 18 gegen die Unterseite der Einbauspüle an und ist dort mit dieser verschweißt.

Wie bereits erwähnt, kann der Fig. 4 entnommen werden, daß die Erfindung bei Verwendung von Haltewinkeln als Halteelemente eine verhältnismäßig große Toleranz für die Lage des Laserstrahls zuläßt - bei einer herkömmlichen Spülengestaltung kann die Mittelachse des Laserstrahls, ausgehend von einer Nullage, um einen Wert von ca. 2 mm in Richtung zur Spülenaußenkante verschoben werden, ohne daß sich dadurch das Schweißergebnis in Festigkeit und optischer Erscheinung auf der Spülenoberseite verändert.

Wie sich aus der eingangs formulierten Definition der vorliegenden Erfindung ergibt, betrifft diese auch emaillierte Metallblech-Einbaubecken oder -spülen, da sich auch bei emaillierten Spülen das durch die Erfindung gelöste Problem stellt, wenn auch in geringerem Maß als bei Einbaubecken oder Einbauspülen aus Edelstahlblech, und zwar deshalb, weil die Emailbeschichtung üblicherweise die Oberflächenstrukturen des beschichteten Metallblechs recht gut erkennen läßt.

## Patentansprüche

1. Metallblech-Einbaubecken oder -spüle mit einem umlaufenden Randbereich, welcher eine zumindest im wesentlichen ebene Randzone besitzt, an die sich nach innen eine im Schnitt konvex gekrümmte Übergangszone anschließt, über die der Randbereich in weiter innen und tiefer als die Randzone liegende Bereiche des Beckens bzw. der Spüle übergeht, sowie mit mindestens einem an der Unterseite des Beckens bzw. der Spüle angeschweißten metallischen Halteelement, **dadurch gekennzeichnet**, daß die Schweißstelle in der Übergangszone (18) liegt und als Laserschweißstelle ausgebildet ist.

2. Metallblech-Einbaubecken oder -Spüle nach Anspruch 1, dadurch gekennzeichnet, daß das Halteelement ein Haltewinkel (20) ist, bei dem der Übergang zwischen den beiden Winkelschenkeln (20a, 20b) an die Krümmung der Unterseite der Übergangszone (18) angepaßt ist, wobei die Schweißstelle im Bereich des Übergangs zwischen den beiden Winkelschenkeln liegt.

3. Metallblech-Einbaubecken oder -Spüle nach Anspruch 1, dadurch gekennzeichnet, daß das Halteelement eine Schiene (20') ist, deren eine Längskante stumpf mit der Unterseite der Übergangszone (18) verschweißt ist.

4. Verfahren zur Herstellung eines Metallblech-Einbaubeckens oder einer Metallblech-Einbauspüle nach einem oder mehreren der Ansprüche 1 bis 3, dadurch gekennzeichnet, daß zum Schweißen von Schweißpunkten ein gepulster Festkörperlaser verwendet wird.

5. Verfahren zur Herstellung eines Metallblech-Einbaubeckens oder einer Metallblech-Einbauspüle nach einem oder mehreren der Ansprüche 1 bis 3, dadurch gekennzeichnet, daß zum Schweißen von Schweißnähten ein Dauerstrich-Festkörperlaser oder ein CO₂-Laser verwendet wird.

6. Verfahren zur Herstellung eines Metallblech-Einbaubeckens oder einer Metallblech-Einbauspüle nach einem oder mehreren der Ansprüche 1 bis 3, dadurch gekennzeichnet, daß der Laserstrahl (22, 22') von unten gegen das Halteelement (20, 20') und die Übergangszone (18) gerichtet wird.

## Claims

1. Sheet-metal built-in basin or sink unit comprising a circumferential edge region having an at least essentially flat edge zone inwardly adjoined by a transition zone of convexly curved cross section via which the edge region continues into regions of the basin or sink unit which lie further inwards and deeper than the edge zone, and at least one metallic holding element welded to the underside of the basin or sink unit, characterized in that the weld is located in the transition zone (18) and is a laser weld.

2. Sheet-metal built-in basin or sink unit as defined in claim 1, characterized in that the holding element is a holding angle (20), with the transition between the two angle legs (20a, 20b) being adapted to the curvature of the underside of the transition zone (18) and the weld being located in the region of the transition between the two angle legs.

3. Sheet-metal built-in basin or sink unit as defined in claim 1, characterized in that the holding element is a rail (20'), one longitudinal edge of which is butt welded to the underside of the transition zone (18).

4. Process for the manufacture of a sheet-metal built-in basin or a sheet-metal built-in sink unit as defined in one or several of claims 1 to 3, characterized in that a pulsed solid-state laser is used for welding spot welds.

5. Process for the manufacture of a sheet-metal built-in basin or a sheet-metal built-in sink unit as defined in one or several of claims 1 to 3, characterized in that a continuous wave solid-state laser or a CO₂ laser is used for welding weld seams.

6. Process for the manufacture of a sheet-metal built-in basin or a sheet-metal built-in sink unit as defined in one or several of claims 1 to 3, characterized in that the laser beam (22, 22') is directed from below at the holding element (20, 20') and the transition zone (18).

## Revendications

1. Bassin ou évier en tôle métallique, à encastrer, comprenant une zone de bord périphérique qui comporte une zone marginale au moins sensiblement plane, à laquelle se rattache vers l'intérieur une zone de transition courbée de manière convexe en coupe, par l'intermédiaire de laquelle la zone de bord se transforme en zones, situées davantage à l'intérieur et plus profondément que la zone marginale, du bassin ou de l'évier, ainsi qu'au moins un élément de retenue métallique soudé sur la face inférieure du bassin ou de l'évier, caractérisé en ce que la soudure se trouve dans la zone de transition (18) et est réalisée sous la forme d'une soudure au laser.

2. Bassin ou évier en tôle d'acier, à encastrer, suivant la revendication 1, caractérisé en ce que l'élément de retenue est une cornière (20) dans laquelle la transition entre les deux ailes de cornière (20a, 20b) est adaptée à la courbure de la face inférieure de la zone de transition (18), la soudure se trouvant dans la zone de la transition entre les deux ailes de cornière.

3. Bassin ou évier en tôle métallique, à encastrer, suivant la revendication 1, caractérisé en ce que l'élément de retenue est un rail (20') dont un bord longitudinal est soudé en bout à la face inférieure de la zone de transition (18).

4. Procédé de fabrication d'un bassin en tôle métallique, à encastrer, ou d'un évier en tôle métallique, à encastrer, suivant une ou plusieurs des revendications 1 à 3, caractérisé en ce que, pour le soudage de points de soudure, on utilise un laser à solide impulsionnel.

5. Procédé de fabrication d'un bassin en tôle d'acier, à encastrer, ou d'un évier en tôle d'acier, à encastrer, suivant une ou plusieurs des revendications 1 à 3, caractérisé en ce que, pour le soudage de cordons de soudure, on utilise un laser à solide continu ou un laser à CO₂.

6. Procédé de fabrication d'un bassin en tôle d'acier, à encastrer, ou d'un évier en tôle d'acier, à encastrer, suivant une ou plusieurs des revendications 1 à 3, caractérisé en ce que le rayon laser (22, 22') est dirigé à partir du bas vers l'élément de retenue (20, 20') et la zone de transition (18).
